**Europäisches Patentamt**

**European Patent Office**

**Office européen des brevets**

(19)

(11) **EP 1 274 144 A2**

(12) # EUROPEAN PATENT APPLICATION

(43) Date of publication:
08.01.2003 Bulletin 2003/02

(51) Int Cl.⁷: **H01M 8/04**, H01M 8/10

(21) Application number: 02014413.5

(22) Date of filing: 28.06.2002

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI**<br><br>(30) Priority: **29.06.2001 US 897782**<br><br>(71) Applicant: **FOAMEX L.P.**<br>**Linwood, Pennsylvania 19061 (US)** | (72) Inventors:<br>• **Kinkelaar, Mark R.**<br>**Glenmoore, Pensylvania 19343 (US)**<br>• **Thompson, Andrew M.**<br>**West Chester, Pensylvania 19382 (US)**<br><br>(74) Representative: **Liesegang, Eva**<br>**Forrester & Boehmert,**<br>**Pettenkoferstrasse 20-22**<br>**80336 München (DE)** |

(54) **Wicking structures for water and /or fuel management in fuel cells**

(57)  Water recovery in direct liquid fuel cells, particularly direct methanol fuel cells, is accomplished by incorporating a wicking structure composed of a wicking material, which may be a composite material, adjacent to the cathode. The wicking material has a free rise wick height of at least one half its longest dimension. The wicking materials may be selected from foams, matted fibers, bundled fibers, woven fibers and nonwoven fibers. In one embodiment, holes or perforations are formed through the thickness of the sheet, and a conductive layer is adjacent to, adhered to or coated on at least one surface of the wicking material. To recycle water, a second wicking structure of wicking material is incorporated adjacent to the anode, and a liquid flow path is provided between the first and second wicking structures. The absorbed water flows through the liquid flow path, is mixed with fuel and introduced to the second wicking structure adjacent to the anode.

Fig.1.

EP 1 274 144 A2

Printed by Jouve, 75001 PARIS (FR)

## Description

This application claims the benefit of U.S. Patent Application No. 09/897,782 filed on June 29, 2001, the disclosure of which is incorporated by reference.

This invention relates to liquid fuel cells in which the liquid fuel is directly oxidized at the anode. In particular, it relates to wicking structures at or adjacent to the cathode to collect discharged water and wicking structures at or adjacent to the anode to meter or deliver liquid fuel/water mixtures to the anode in direct methanol fuel cells. The invention also relates to a water recovery and recycling system to deliver recovered water to a fuel cell or a micro fuel cell reformer.

## Background of the Invention

Electrochemical fuel cells convert reactants, namely fuel and oxidants, to generate electric power and reaction products. Electrochemical fuel cells generally employ an electrolyte disposed between two electrodes (an anode and a cathode). An electrocatalyst is needed to induce the desired electrochemical reactions at the electrodes. Solid polymer fuel cells operate in a temperature range of from about 0 □ C to the boiling point of the fuel, *i.e.,* for methanol about 65 □ C, or the boiling point of the fuel mixture, and are particularly preferred for portable applications. Liquid feed solid polymer fuel cells include a membrane electrode assembly ("MEA"), which comprises a solid polymer electrolyte or proton-exchange membrane, sometimes abbreviated "PEM", disposed between two electrode layers. Flow field plates for directing the reactants across one surface of each electrode are generally disposed on each side of the membrane electrode assembly. These plates may also be called the anode backing and cathode backing.

A broad range of reactants have been contemplated for use in solid polymer fuel cells, and such reactants may be delivered in gaseous or liquid streams. The oxidant stream may be substantially pure oxygen gas, but preferably a dilute oxygen stream such as found in air, is used. The fuel stream may be substantially pure hydrogen gas, or a liquid organic fuel mixture. A fuel cell operating with a liquid fuel stream wherein the fuel is reacted electrochemically at the anode (directly oxidized) is known as a direct liquid feed fuel cell.

A direct methanol fuel cell ("DMFC") is one type of direct/liquid feed fuel cell in which the fuel (liquid methanol) is directly oxidized at the anode. The following reactions occur:

Anode:       $CH_3OH + H_2O \rightarrow 6H^+ + CO_2 + 6e^-$

Cathode:       $1.5O_2 + 6H^+ + 6e^- \rightarrow 3H_2O$

The hydrogen ions ($H^+$) pass through the membrane and combine with oxygen and electrons on the cathode side producing water. Electrons ($e^-$) cannot pass through the membrane, and therefore flow from the anode to the cathode through an external circuit driving an electric load that consumes the power generated by the cell. The products of the reactions at the anode and cathode are carbon dioxide ($CO_2$) and water ($H_2O$), respectively. The open circuit voltage from a single cell is about 0.7 volts. Several direct methanol fuel cells are stacked in series to obtain greater voltage.

Other liquid fuels may be used in direct liquid fuel cells besides methanol -- *i.e.*, other simple alcohols, such as ethanol, or dimethoxymethane, trimethoxymethane and formic acid. Further, the oxidant may be provided in the form of an organic fluid having a high oxygen concentration - *i.e.*, a hydrogen peroxide solution.

A direct methanol fuel cell may be operated on aqueous methanol vapor, but most commonly a liquid feed of a diluted aqueous methanol fuel solution is used. It is important to maintain separation between the anode and the cathode to prevent fuel from directly contacting the cathode and oxidizing thereon (called "cross-over"). Crossover results in a short circuit in the cell since the electrons resulting from the oxidation reaction do not follow the current path between the electrodes. To reduce the potential for cross-over of methanol fuel from the anode to the cathode side through the MEA, very dilute solutions of methanol (for example, about 5% methanol in water) are typically used as the fuel streams in liquid feed DMFCs.

The polymer electrolyte membrane (PEM) is a solid, organic polymer, usually polyperfluorosulfonic acid that comprises the inner core of the membrane electrode assembly (MEA). Commercially available polyperfluorosulfonic acids for use as PEMs are sold by E.I. DuPont de Nemours & Company under the trademark NAFION®. The PEM must be hydrated to function properly as a proton (hydrogen ion) exchange membrane and as an electrolyte.

Substantial amounts of water are liberated at the cathode and must be removed so as to prevent flooding the cathode and halting the reaction. In prior art fuel cells, if the air flow past the cathode is too slow, the air cannot carry all of the water present at the cathode out of the fuel cell. With water flooding the cathode, not enough oxygen is able to penetrate past the water to reach the cathode catalyst sites to maintain the reaction.

Prior art fuel cells incorporated porous carbon paper or cloth as backing layers adjacent the PEM of the MEA. The porous carbon materials not only helped to diffuse reactant gases to the electrode catalyst sites, but also assisted in water management. Porous carbon was selected because carbon conducts the electrons exiting the anode and entering the cathode. However, porous carbon has not been found to be an effective material for wicking excess water away from the cathode.

Nor has porous carbon been found effective to meter fluid to the anode. And porous carbon paper is expensive. Consequently, the fuel cell industry continues to seek backing layers that will improve liquid recovery and removal, and maintain effective gas diffusion, without adversely impacting fuel cell performance or adding significant expense.

It would also be advantageous to recycle the water liberated at the cathode for use as the diluent in the liquid fuel delivery system. Such recycled water could be mixed with concentrated methanol before introducing the liquid fuel to the fuel cell. Substantial space and weight savings would result if fuel cartridges contained predominantly methanol, and that methanol could then be diluted to an aqueous solution of from about 3 to 5% methanol concentration using recycled water emitted by the fuel cell reaction. The fuel cartridge carried with the fuel cell containing predominantly methanol could be smaller and lighter weight. A material that can wick the excess water away from the cathode must also be able to release the collected water for recycling into the liquid fuel. Prior art carbon paper backing layers do not meet these competing criteria.

While the prior art has identified recycling the liberated water to mix with pure methanol before introducing the liquid fuel into the direct methanol liquid fuel cell as one goal for improving fuel cell performance, there is no disclosure of an effective means of recovering and recycling such water independent of fuel cell orientation. The problem is particularly acute for fuel cells intended to be used in portable applications, such as in consumer electronics and cell phones, where the fuel cell orientation with respect to gravitational forces will vary.

## Summary of the Invention

According to a first embodiment of the invention, a wicking structure is installed substantially adjacent to a cathode or an anode of a liquid fuel cell. The wicking structure comprises a wicking material into which a liquid wicks and from which said liquid subsequently may be metered or discharged. The wicking structure thus not only wicks and retains liquids, but permits liquids to be controllably metered out or delivered from such structure. The wicking material used to make the wicking structure can also be electrically conductive so that the wicking structure can conduct electricity.

The wicking structure has a geometry having a longest dimension. For a cylindrical shaped wicking structure, the longest dimension may be either its height or its diameter, depending upon the relative dimensions of the cylinder. For a rectangular box-shaped wicking structure, the longest dimension may be either its height or its length or its thickness, depending upon the relative dimensions of the box. For other shapes, such as a square box-shaped reservoir, the longest dimension may be the same in multiple directions. The free rise wick height (a measure of capillarity) of the wicking structure preferably is greater than at least one half of the longest dimension. Most preferably, the free rise wick height is greater than the longest dimension.

The wicking structure may be made from foams, matted fibers, bundled fibers, woven fibers or nonwoven fibers. The wicking structure for the anode can in general be a porous member made of one or more polymers resistant to the liquid fuel. Preferably, the wicking structure is constructed from a wicking material selected from polyurethane foam (preferably, a felted polyurethane foam, reticulated polyurethane foam or felted reticulated polyurethane foam), melamine foam, cellulose foam, nonwoven felts or bundles of polyamide such as nylon, polypropylene, polyester such as polyethylene terephthalate, cellulose, polyethylene, polypropylene and polyacrylonitrile, and mixtures thereof. Alternatively, the wicking structure is preferably constructed with a wicking material selected from polyurethane foams (preferably, a felted polyurethane foam, reticulated polyurethane foam or felted reticulated polyurethane foam), melamine foams, cellulose foams, nonwoven felts of a polyamide such as nylon, polyethylene, polypropylene, polyester such as polyethylene terephthalate, polyacrylonitrile, or mixtures thereof, bundled, matted or woven fibers of cellulose, polyethylene, polypropylene, polyester such as polyethylene terephthalate, polyacrylonitrile, and mixtures thereof. Certain inorganic porous materials, such as sintered inorganic powders of silica or alumina, can also be used as the wicking material for the wicking structure.

A felted foam is produced by applying heat and pressure sufficient to compress the foam to a fraction of its original thickness. For a compression ratio of 30, the foam is compressed to 1/30 of its original thickness. For a compression ratio of 2, the foam is compressed to 1/2 of its original thickness.

A reticulated foam is produced by removing the cell windows from the cellular polymer structure, leaving a network of strands and thereby increasing the fluid permeability of the resulting reticulated foam. Foams may be reticulated by in situ, chemical or thermal methods, all as known to those of skill in foam production.

In a particularly preferred embodiment, the wicking structure is made with a wicking material with a gradient capillarity, such that the flow of the liquid is directed from one region of the structure to another region of the structure as a result of the differential in capillarity between the two regions. One method of producing a foam with a gradient capillarity is to felt the foam to varying degrees of compression along its length. The direction of capillarity flow of liquid is from a lesser compressed region to a greater compressed region. Alternatively, the wicking structure may be made of a composite of individual components of foams or other materials with distinctly different capillarities.

Because it is important to have gases (air or oxygen) reach the active sites at the cathode, the wicking structure may be formed so as to increase air permeability. Hence, if the wicking structure is a sheet of wicking material, the sheet may define one or more holes through its thickness. Such holes may be formed by perforating or punching the sheet. The holes may be formed in a regular grid pattern or in an irregular pattern. Alternatively, the sheet may define a one or more channels formed in a facing surface. The channels may be formed by cutting, such as by surface modification or convolute cutting as known in the foam fabrication industry. The channels or holes may also be formed using thermo-forming techniques in which the surface of the sheet is contoured under applied heat and pressure.

Because it is important to have a conductive path for electrons to reach the active sites at the cathode, the wicking structure preferably further comprises a conductive layer either adjacent to or connected to or coated on the wicking material forming the wicking structure. The conductive layer may be a metal screen, a metal wool, or an expanded metal foil. In a preferred embodiment, the conductive layer is attached to a surface of the sheet of wicking material forming the wicking structure, such as by crimping the conductive layer around the sheet. Alternatively, the conductive layer may be a coating coated onto a surface of the sheet or penetrating through the entire thickness of the sheet. Such coatings include metals, carbons and carbon-containing materials, conductive polymers and suspensions or mixtures thereof. Metals may be coated using vapor deposition, plasma, arc and electroless plating techniques, or any other suitable coating technique. In another preferred embodiment, the front and at least a portion of the back surface of a sheet of wicking material is covered with the conductive layer. When the conductive layer is crimped around the sheet, the conductive layer covers also the top and bottom edges of the sheet. The conductive layer is in communication with a current circuit.

The invention also includes a water recovery system for a direct methanol fuel cell having (a) a wicking structure into which water wicks and from which said water may be metered installed as a backing layer for a cathode in the fuel cell, said wicking structure having a longest dimension and a free rise wick height greater than at least one half of the longest dimension; (b) a liquid flow path in communication with the wicking structure through which absorbed water from the wicking structure flows away from the wicking structure; and (c) a water drawing means, such as a pump or wick, to draw absorbed water from the wicking structure and into the liquid flow path. Water absorbed by the wicking structure is drawn away from the cathode and pumped or directed to a reservoir or channel to be mixed with liquid fuel prior to its introduction to the anode side of the fuel cell.

The wicking structure in the water recovery system is made from a wicking material selected from the group consisting of foam, matted, bundled or woven fibers and nonwoven fibers. Preferably, the wicking structure has a conductive layer associated therewith, which may be a separate layer adjacent to the wicking material or may be attached or coated thereon. The conductive layer is in communication with a current circuit.

In one of the embodiments, a second wicking structure is installed as the backing layer for an anode in the fuel cell. The second wicking structure may have the same or different construction from the first wicking structure. The second wicking structure has a longest dimension and a free rise wick height greater than at least one half of its longest dimension, preferably greater than its longest dimension. The recovered and recycled water mixed with the liquid fuel is directed to the second wicking structure to re-fuel the liquid fuel cell reaction at the anode.

In another embodiment of the invention, liquid fuel cell performance is improved by incorporating as a backing layer for the cathode, and optionally as a backing layer for the anode, the wicking structure of the first embodiment of the invention. Because the wicking structure efficiently and effectively wicks water away from the cathode, the reaction continues without flooding caused by the water emitted by the fuel cell. The absorbed collected water may be recycled and mixed with a source of liquid fuel before re-introducing it to the anode side of the fuel cell. Preferably the recycled water mixed with fuel is introduced to a wicking structure forming a backing layer for the anode. This second wicking structure when so wetted with the recycled water and fuel helps both to distribute the fuel and to keep the PEM hydrated.

Within the scope of the invention is a liquid fuel cell, comprising

an anode supplied with an aqueous liquid fuel which is oxidized at said anode;

a cathode supplied with a gaseous oxidant;

a solid polymer electrolyte membrane disposed between said anode and cathode;

a liquid fuel flow path which delivers the liquid fuel to the anode;

a water flow path which delivers water to the liquid fuel flow path;

a concentrated liquid fuel line which delivers concentrated liquid fuel to the liquid fuel flow path to mix with water therein to form the aqueous liquid fuel;

a cathode wicking structure incorporated in the cathode or in fluid communication therewith, wherein the cathode wicking structure comprises a cathode wicking material into which water can wick and from which the water can be released, said cathode wicking material having a cathode wicking material longest dimension and a free rise wick height greater than one half of the cathode wicking material longest dimension (preferably, the free rise wick height is greater than the cathode wicking material longest dimension); and

a water drawing means for drawing water from the cathode wicking structure to the water flow path. In some of the embodiments, the cathode wicking structure has a thickness and defines at least one hole through the thickness having a size such as to deliver an effective amount of the gaseous oxidant to the cathode to conduct an oxidizing reaction at the cathode. Preferably, the cathode wicking structure has a plurality of holes through said thickness, and wherein the number and size of the holes deliver therethrough an effective amount of the gaseous oxidant to the cathode to conduct the oxidizing reaction at the cathode.

Another aspect of the present invention is a method for liquid management in a liquid fuel cell having an anode and a cathode, said method comprising the steps of:

(a) wicking water from the cathode into a cathode wicking structure in fluid communication with the cathode, wherein the cathode wicking structure comprises a cathode wicking material into which water can wick and from which water can be released, said cathode wicking material having a cathode wicking material longest dimension and a first free rise wick height greater than one half of the cathode wicking material longest dimension;
(b) releasing water from the cathode wicking structure;
(c) providing a source of a concentrated liquid fuel;
(d) mixing water released from the cathode wicking structure in step (b) with the concentrated liquid fuel from the source to form an aqueous liquid fuel; and thereafter
(e) supplying the aqueous liquid fuel to the anode by delivering the aqueous liquid fuel mixture to the anode.

In an embodiment of the method for liquid management of the invention, step (b) is conducted by drawing water from the cathode wicking structure using a water drawing means to deliver water into a water flow path. The water drawing means can be a pump or a wick having more capillarity than the cathode wicking structure to deliver water into a water flow path.

In another embodiment of the method for liquid management of the invention, step (e) is conducted by delivering the aqueous liquid fuel to an anode wicking structure incorporated in the anode or in fluid communication with the anode, wherein the anode wicking structure comprises an anode wicking material into which the aqueous liquid fuel can wick and from which the aqueous liquid fuel can be released, said anode wicking material having an anode wicking material longest dimension and a free rise wick height greater than one half of the anode wicking material longest dimension. In step (e), the aqueous liquid fuel can be delivered to the anode wicking structure incorporated in the anode or in fluid communication with the anode by an aqueous liquid fuel delivery means. The aqueous liquid fuel delivery means can be a pump or a wick having less capillarity than the anode wicking structure.

## Description of the Figures

FIG. 1 is schematic view in side elevation of a direct methanol fuel cell incorporating the wicking structures according to the invention;
FIG. 2 is a top plan view of a first embodiment of a wicking structure according to the invention that includes a perforated sheet covered with a metal screen;
FIG. 3 is a top plan view of a second embodiment of a wicking structure according to the invention that includes a sheet without perforations covered with a metal screen;
FIG. 4 is a left side elevational view of the wicking structure of FIG. 3;
FIG. 5 is a top plan view of a third embodiment of a wicking structure according to the invention that includes a perforated sheet without a metal screen covering;
FIG. 6 is a right side elevational view of the wicking structure of FIG. 5, wherein the view is partially broken away to show the perforations extending through the sheet;
FIG. 7 is a top plan view of a fourth embodiment of a wicking structure according to the invention that lacks perforations and lacks a metal screen covering;
FIG. 8 is a top plan view of a fifth embodiment of a wicking structure according to the invention having channels;
FIG. 9 is a left side elevational view of the wicking structure of FIG. 8;
FIG. 10 is a schematic diagram of a wedge of wicking material prior to felting; and
FIG. 11 is a schematic diagram of the wicking material of FIG. 10 after felting.
FIG. 12 is schematic diagram of an embodiment of the liquid fuel cell according to the invention, with recirculation of the product water from the cathode to be mixed with a concentrated liquid fuel in order to supply the anode with an aqueous liquid fuel.
FIG. 13 is schematic diagram of another embodiment of the liquid fuel cell according to the invention, with recirculation of the product water from the cathode.
FIG. 14 is schematic diagram of another embodiment of the liquid fuel cell according to the invention, with recirculation of the product water from the cathode.
FIG. 15 is schematic diagram of another embodiment of the liquid fuel cell according to the invention, with recirculation of the product water from the cathode.
FIG. 16 is schematic diagram of another embodiment of the liquid fuel cell according to the invention, with recirculation of the product water from the cathode.

FIG. 17 is schematic diagram of another embodiment of the liquid fuel cell according to the invention, with recirculation of the product water from the cathode.

FIG. 18 is schematic diagram of another embodiment of the liquid fuel cell according to the invention, with recirculation of the product water from the cathode.

FIG. 19 is schematic diagram of another embodiment of the liquid fuel cell according to the invention, with recirculation of the product water from the cathode.

FIG. 20 is a schematic diagram of an embodiment of a membrane electrode assembly in a liquid fuel cell according to the invention, with perforation of the anode wicking structure.

FIG. 21 is a schematic diagram of another embodiment of a membrane electrode assembly in a liquid fuel cell according to the invention, with perforation of the anode wicking structure.

FIG. 22 is a schematic diagram of an embodiment of a membrane electrode assembly in a liquid fuel cell according to the invention, with perforation of the cathode wicking structure.

FIG. 23 is a schematic diagram of another embodiment of a membrane electrode assembly in a liquid fuel cell according to the invention, with perforation of the cathode wicking structure.

FIG. 24 is a schematic diagram of another embodiment of a membrane electrode assembly in a liquid fuel cell according to the invention, with perforation of the anode and cathode wicking structures.

## Description of the Preferred Embodiments

The present invention is also directed to the liquid fuel cell described above, wherein

the cathode wicking structure is incorporated in the cathode;

the cathode further comprises a first cathode surface, second cathode surface and catalyst on the second cathode surface, said second cathode surface being adjacent to the solid polymer electrolyte membrane and said first cathode surface facing away from the solid polymer electrolyte membrane; and

the cathode wicking structure is planar and has first and second cathode wicking structure surfaces, said second cathode wicking structure surface being adjacent to the catalyst, the first cathode wicking structure surface forming the first cathode surface. Optionally, said first cathode wicking structure surface has at least one groove thereon with a size such as to deliver an amount of the gaseous oxidant to the cathode to conduct an oxidizing reaction thereon. Preferably, said first cathode wicking structure surface has a plurality of grooves thereon, wherein the number and size of the grooves are such as to deliver an effective amount of the gaseous oxidant to the cathode to conduct the oxidizing reaction at the cathode.

The present invention is also directed to the liquid fuel cell described above, wherein

the cathode wicking structure is external to but in fluid communication with the cathode;

the cathode further comprises a first cathode surface and second cathode surface, said second cathode surface being adjacent to the solid polymer electrolyte membrane and said first cathode surface facing away from the solid polymer electrolyte membrane; and

the cathode wicking structure is planar and has a first and second cathode wicking structure surfaces, said second cathode wicking structure surface being adjacent to the first cathode surface and said first cathode wicking structure surface facing away from the cathode. Optionally, said second cathode wicking structure surface has at least one groove thereon with a size such as to deliver an amount of the gaseous oxidant to the cathode to conduct an oxidizing reaction thereon. Preferably, said second cathode wicking structure has a plurality of grooves thereon, wherein the number and size of the grooves are such as to deliver an effective amount of the gaseous oxidant to the cathode to conduct the oxidizing reaction at the cathode.

Within the scope of the present invention is any of the liquid fuel cells described above further comprising a wicking structure at the anode. The anode wicking structure can be incorporated in the anode or in fluid communication therewith, wherein the anode wicking structure comprises an anode wicking material into which the liquid fuel can wick and from which the liquid fuel can be released, said anode wicking material having an anode wicking material longest dimension and a free rise wick height greater than one half of the anode wicking material longest dimension, and said anode wicking structure being in fluid communication with the liquid fuel flow path. The free rise wick height of the anode wicking material is preferably greater than the anode wicking material longest dimension. Optionally, the anode wicking structure has a thickness and defines at least one hole through said thickness having an opening area sized to permit the removal of carbon dioxide from the anode. Preferably, the anode wicking structure has a plurality of holes through said thickness having a total opening area sized to permit the removal of carbon dioxide from the anode.

In the liquid fuel cell of the invention having the anode wicking structure, the anode wicking structure can be incorporated in the anode, wherein

the anode further comprises a first anode surface, a second anode surface and catalyst on the second anode surface, said second anode surface being adjacent to the solid polymer electrolyte membrane and said first anode surface facing away from the solid polymer electrolyte membrane; and

the anode wicking structure is planar and has a first and second anode wicking structure surfaces, said second anode wicking structure surface being adjacent to the catalyst, said first anode wicking structure surface forming the first anode surface. Optionally, said first anode wicking structure surface has at least one groove thereon with a size such as to allow carbon dioxide to escape from the anode. Preferably, said first anode wicking structure surface has a plurality of grooves thereon, wherein the number and size of the grooves are such as to allow carbon dioxide to escape from the anode.

In another embodiment of the liquid fuel cell having an anode wicking structure, the anode wicking structure is external to but in fluid communication with the anode, wherein

the anode further comprises a first anode surface and a second anode surface, said second anode surface being adjacent to the solid polymer electrolyte membrane and said first anode surface facing away from the solid polymer electrolyte membrane; and

the anode wicking structure is planar and has a first and second anode wicking structure surfaces, said second anode wicking structure surface being adjacent to the first anode surface and said first anode wicking structure surface facing away from the anode. Optionally, said first anode wicking structure surface has at least one groove thereon with a size such as to allow carbon dioxide to escape from the anode. Preferably, said first anode wicking structure surface has a plurality of grooves thereon, wherein the number and size of the grooves are such as to allow carbon dioxide to escape from the anode.

The present invention is also directed to any liquid fuel cells comprising an anode, polymer electrolyte membrane and cathode, wherein either or both electrodes have wicking structures, wherein the wicking structure of at least one of the electrodes has at least one hole through its thickness. The hole(s) at the cathode wicking structure aids in the delivery of the gaseous oxidant to the cathode for the oxidizing reaction at the cathode. The hole(s) at the anode wicking structure aids in the removal of carbon dioxide from the anode. In some of the embodiments of the liquid fuel cells, the cathode wicking structure has at least one hole, the anode wicking structure has at least one hole, or both the cathode and anode wicking structures have at least one hole.

In the liquid fuel cell of the present invention with recirculation of the product water from the cathode to the anode, the liquid fuel cell can have at least one hole through the wicking structure of one or both electrodes, at least one groove on the surface of the wicking structure of one or both electrodes, a combination of at least one hole and at least one groove at one or both electrodes, at least one hole at the cathode combined with at least one groove at the anode or vice versa, and at least one groove at the cathode combined with at least one hole at the anode or vice versa. The hole(s) or groove(s) at the cathode wicking structure aids in the delivery of the gaseous oxidant to the cathode for the oxidizing reaction at the cathode. The hole(s) or groove(s) at the anode wicking structure aids in the removal of carbon dioxide from the anode.

In the present invention, the water drawing means can be a pump or a wick having higher capillarity than the cathode wicking structure. Preferably, the water drawing means is a pump, such as a micropump. The aqueous liquid fuel delivery means can be a pump or a wick having less capillarity than the anode wicking structure, with the pump preferred.

The cathode wicking material or anode wicking material can be foams, bundled fibers, matted fibers, woven fibers, nonwoven fibers or inorganic porous materials. Preferably, the cathode wicking material or anode wicking material is selected from foams, bundled fibers, matted fibers, woven fibers or nonwoven fibers. The cathode wicking material or anode wicking material, more preferably, is selected from polyurethane foam, melamine foam, cellulose foam, nonwoven felts of polyamide such as nylon, polyethylene, polypropylene, polyester such as polyethylene terephthalate, polyacrylonitrile, or mixtures thereof, bundled, matted or woven fibers of cellulose, polyester, polyethylene, polypropylene and polyacrylonitrile, or mixtures thereof. In this application, the term "nylon" refers to any members of the nylon family. The cathode wicking material or anode wicking material, most preferably, is a polyurethane foam such as a felted polyurethane foam, reticulated polyurethane foam or felted reticulated polyurethane foam.

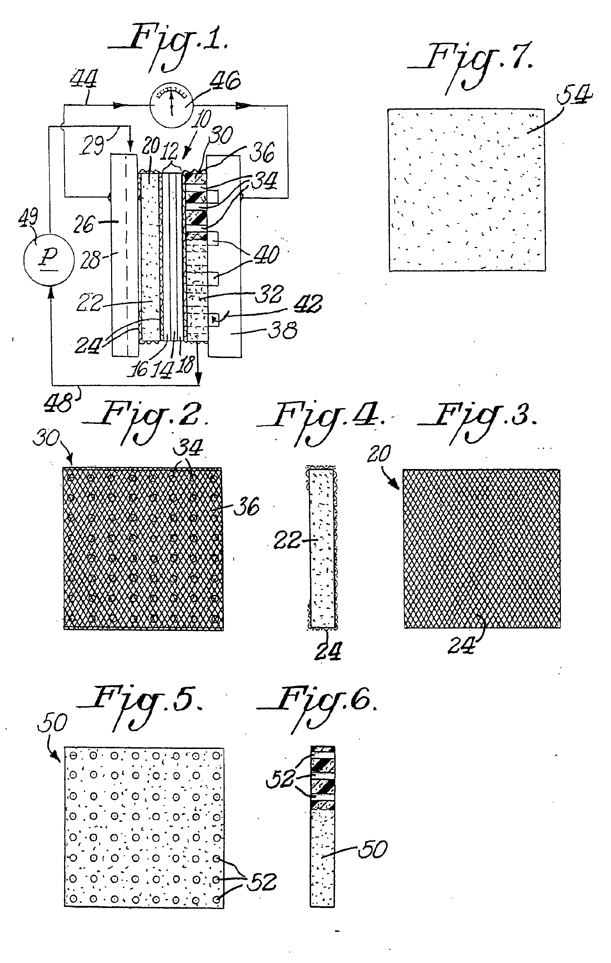

Referring first to FIG. 1, a direct methanol fuel cell **10** includes a membrane electrode assembly ("MEA") **12** comprising a polymer electrolyte membrane ("PEM") **14** sandwiched between an anode **16** and a cathode **18**. The PEM **14** is a solid, organic polymer, usually polyperfluorosulfonic acid that comprises the inner core of the membrane electrode assembly (MEA). Commercially available polyperfluorosulfonic acids for use as a PEM are sold by E.I. DuPont de Nemours & Company under the trademark NAFION®. Catalyst layers (not shown) are present on each side of the PEM. The PEM must be hydrated to function properly as a proton (hydrogen ion) exchanger and as an electrolyte.

The anode **16** and cathode **18** are electrodes separated from one another by the PEM. The anode carries a negative charge, and the cathode carries a positive charge.

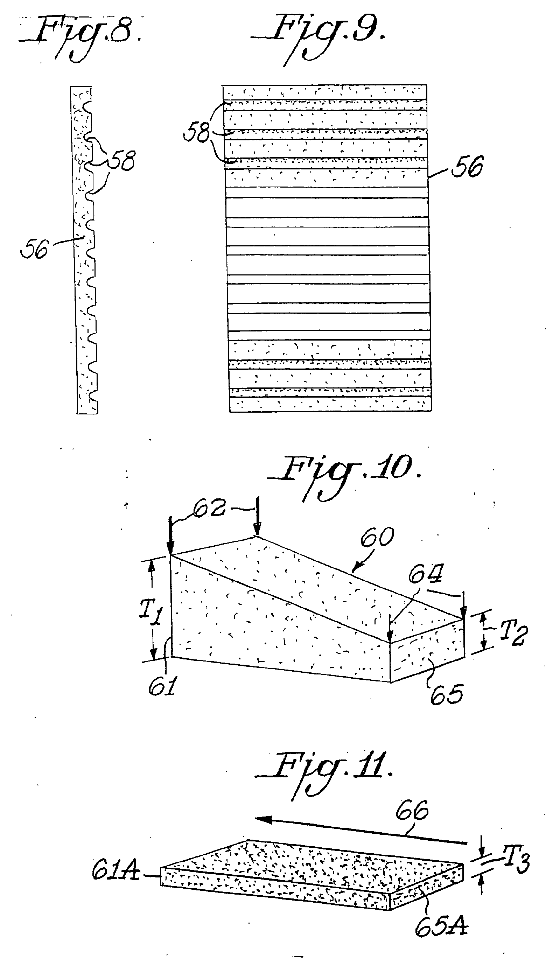

Adjacent to the anode is provided a wicking structure **20** formed from a 12 mm thick sheet **22** of 85 pore reticulated polyether polyurethane foam that has been felted, or compressed, to one sixth of its original thickness (2 mm). See also FIGs. 3 and 4. The felted foam is cut to size, and a thin, expanded metal foil **24** is partially wrapped around the sheet, so as to cover the entire MEA side of the sheet **22**. The expanded metal foil we used was Delker 1.5Ni5-050F nickel screen. As shown in FIG. 1, the foil **24** wraps around the top and bottom edges of the foam sheet **22** so that a portion of the foil also contacts the side of the sheet facing away from the MEA **12**. The foil **24** is crimped in place on the sheet **22**. The wicking structure **20** will wick and collect water and will collect current. It helps to distribute the liquid fuel and on the anode side of the fuel cell, and helps to hydrate the PEM **14**.

In the direct methanol fuel cell of FIG. 1, the fuel may be liquid methanol or an aqueous solution of methanol mixed with water, wherein methanol comprises from 3 to 5% of the solution. Other liquid fuels providing a source of hydrogen ions may be used, but methanol is preferred.

Adjacent to the wicking structure **20** is bipolar plate **26**. Bipolar plate **26** is an electrical conductive material and has formed therein channels **28** for directing the flow of liquid fuel to the anode side of the fuel cell. Arrow **29** indicates the direction of the flow of liquid fuel into the channels **28** in bipolar plate **26**.

Adjacent to the cathode **18** is provided a second wicking structure **30** formed from a 12 mm thick sheet **32** of 85 pore reticulated polyether polyurethane foam that has been felted, or compressed, to one sixth of its original thickness (2 mm). See also FIG. 2. The felted foam is perforated with a regularisquare grid pattern of holes with a diameter of 0.5 mm each, leaving a perforation void volume of approximately 18% in the sheet. The felted foam is then cut to size and a thin, expanded metal foil **36** (Delker 1.5Ni5-050F nickel screen) is partially wrapped around the sheet, so as to cover the entire MEA side of the sheet **32**. As shown in FIG. 1, the foil **36** wraps around the top and bottom edges of the foam sheet **32** so that a portion of the foil **36** also contacts the side of the sheet facing away from the MEA **12**. The second wicking structure **30** will wick and collect water and will collect current. It helps to remove water from the cathode side of the fuel cell to prevent flooding, and allows air to contact the cathode side to ensure oxygen continues to reach the active sites.

Adjacent to the second wicking structure **30** is a bipolar plate **38**. Bipolar plate **38** is an electrical conductive material and has formed therein channels **40** for directing the flow of oxidizing gas, such as oxygen or air, to the cathode side of the fuel cell **10**. Arrow **42** indicates the flow of gas into one of the channels **40** in the bipolar plate **38**.

In operation, the liquid fuel (methanol) **29** reacts at the surface of the anode to liberate hydrogen ions (H$^+$) and electrons (e$^-$). The hydrogen ions (H$^+$) pass through the PEM **14** membrane and combine with oxygen **42** and electrons on the cathode side producing water. Electrons (e$^-$) cannot pass through the membrane and flow from the anode to the cathode through an external circuit **44** containing an electric load **46** that consumes the power generated by the cell. The products of the reactions at the anode and cathode are carbon dioxide (CO$_2$) and water (H$_2$O), respectively.

The wicking structure **30** collects the water produced at the cathode **18** and wicks it away from the reactive sites on the cathode. The water may then be carried through liquid flow path **48**, which may be piping or tubing to a reservoir or mixing point for mixing with pure liquid fuel to form an aqueous liquid fuel solution. Due to the capillary action of the wicking structure, which holds liquid within voids or pores in that structure, pumping or drawing forces must be applied to draw the water from the second wicking structure **30** into the liquid flow path **48**. Pump **49** is one means for drawing water out of the wicking structure **30** for recycling with the liquid fuel supply. A particularly preferred pump is a microdose dispensing pump or micro-pump, that will pump 0.8 microliters per pulse, such as is available from Pump Works, Inc. Alternative pumping means are readily apparent to those of skill in the art.

The wicking structures according to the invention have a thickness in the range of 0.1 to 10 mm, preferably from 0.5 to 4.0 mm, and most preferably less than about 2.0 mm.

The wicking structures are formed from wicking materials of foam, bundled fiber and nonwoven fiber, or combinations of these materials. The following materials are particularly preferred: polyurethane foam, felted polyurethane foam, reticulated polyurethane foam, felted reticulated polyurethane foam, melamine foam, cellulose foam, nonwoven felts or bundles of nylon, polypropylene, polyester, cellulose, polyethylene terephthalate, polyethylene, polypropylene and polyacrylonitrile, and mixtures thereof.

If a polyurethane foam is selected for the wicking structure, such foam should have a density in the range of 0.5 to 25 pounds per cubic foot, and pore sizes in the range of 10 to 200 pores per linear inch, preferably a density in the range of 0.5 to 15 pounds per cubic foot and pore sizes in the range of 40 to 200 pores per linear inch, most preferably a density in the range of 0.5 to 10 pounds per cubic foot and pore sizes in the range of 75 to 200 pores per linear inch.

Felting is carried out under applied heat and pressure to compress a foam structure to an increased firmness and reduced void volume. Once felted, the foam will not rebound to its original thickness, but will remain compressed. Felted foams generally have improved capillarity and water holding than unfelted foams. If a felted polyurethane foam is selected for the wicking structure, such foam should have a density in the range of 2.0 to 45 pounds per cubic foot and a compression ratio in the range of 1.1 to 30, preferably a density in the range of 3 to 15 pounds per cubic foot and compression ratio in the range of 1.1 to 20, most preferably a density in the range of 3 to 15 pounds per cubic foot and compression ratio in the range of 2.0 to 15.

The conductive layer associated with the sheet of wicking material to form the preferred embodiments of the wicking structure may be a metal screen or an expanded metal foil or metal wool. Exemplary metals for this application are gold, platinum, nickel, stainless steel, tungsten, rhodium, cobalt, titanium, silver, copper, chrome, zinc, iconel, and composites or alloys thereof. Metals that will not corrode in moist environments will be suitable for the conductive layer. The conductive layer might also be a conductive carbon coating or a paint or coating having conductive particles dispersed therein.

As shown in FIGs. 1-4, the metal foil is crimped around the sheet of wicking material. Alternatively, the conductive layer may be connected or attached to the surface of the wicking material. If the wicking material is a foam and the conductive layer is a metal substrate, the conductive layer may be laminated directly to the surface of the foam without adhesives. For example, the surface of the foam may be softened by heating and the conductive layer applied to the softened foam surface. Alternatively, the conductive layer may be compressed into the foam when the foam is felted. If the conductive layer is formed with a coating, the coating may be applied to the wicking material by various methods known to those skilled in the art, such as painting, vapor deposition, plasma deposition, arc welding and electroless plating.

One advantage of the wicking structures according to the invention is that they not only will wick and hold liquids, but also will release and permit liquids to be metered therefrom in a predictable manner without reliance on or interference from gravitational forces. The capillary action of the wicking material can be controlled, such that the wicking structure will perform regardless of orientation with respect to gravity. Such wicking structures are ideal for use in fuel cells to power portable electronic equipment, such as cell phones, which do not remain in a fixed orientation during use.

FIGs. 5 and 6 show an alternative wicking structure **50** for use on the cathode side of the liquid fuel cell. A 12 mm thick 85 pore reticulated polyether polyurethane foam is permanently compressed to one-sixth of its original thickness (2 mm) (compression ratio = 6). The felted foam is perforated with a regular square grid pattern of holes **52** with a diameter of 0.5 mm each, leaving a void volume of approximately 18% in the sheet. While this embodiment lacks a conductive layer or coating, the wicking structure **50** will wick and collect water from the cathode side of the liquid fuel cell and will also permit oxygen source gas to contact the cathode side of the MEA through the perforations **52** to prevent flooding.

FIG. 7 shows an alternative wicking structure **54** for use on the anode or cathode side of the liquid fuel cell. A 12 mm thick 85 pore reticulated polyether polyurethane foam is felted (permanently compressed) to one-sixth of its original thickness (2 mm) (compression ratio = 6). The open structure having voids between the strands of the foam, which permit fluid to flow therein due to the reticulation, will wick and hold water or liquid fluid or a liquid fluid aqueous solution. While this embodiment lacks a conductive layer or coating, the wicking structure **54** will wick and collect water from the cathode side of a liquid fuel cell. If installed on the anode side, this embodiment will distribute and hold liquid fuel, and help to hydrate the PEM.

FIGs. 8 and 9 show one configuration for a sheet **56** of wicking material formed with channels **58**. The channels **58** are shown in a regular, parallel array, but may be provided in alternative configurations as suited to the application. The channels provide gaps for increased air flow. The wicking material may include a combination (not shown) of channels and holes or perforations to further increase air flow to the electrodes in the fuel cell, particularly the cathode. This wicking material alone may form a wicking structure, or may be combined with a conductive layer (not shown in FIGs. 8 and 9).

FIGs. 10 and 11 illustrate schematically the method for making a wicking material, such as a foam, with a gradient capillarity. As shown in FIG. 10, a wedge-shaped slab **60** of foam of consistent density and pore size has a thickness **T1** at a first end **61** and a second thickness **T2** at a second end **65**. The slab **60** is subjected to a felting step - high temperature compression for a desired time to compress the slab **60** to a consistent thickness **T3,** which is less than the thicknesses **T1** and **T2.** A greater compressive force, represented by arrows **62,** is required to compress the material from **T1** to **T3** at the first end **61** than is the compressive force, represented by arrows **64** required to compress the material from **T2** to **T3** at the second end **65.**

The compression ratio of the foam material varies along the length of the felted foam shown in FIG. 11, with the greatest compression at the first end **61 (T1** to **T3).** The capillary pressure is inversely proportional to the effective capillary radius, and the effective capillary radius decreases with increasing firmness or compression. Arrow **66** in FIG. 11 represents the direction of capillary flow from the region of lower felt firmness or capillarity to higher felt firmness. Thus, if a wicking material or wicking structure is formed with a foam having a gradient capillarity, the liquid fuel wicked into the material may be directed to flow from one region of the material with lower compression ratio to another region with higher compression ratio.

In one preferred embodiment, the wicking material of the wicking structure is felted to a differential degree of compression from one region to another, such that the capillarity of the wicking material varies across its length. In this manner, liquids held within the wicking material may be directed to flow away from one region to another region of the wicking material. Such differential degree of felting in a wicking material within a wicking structure adjacent to the cathode will help to draw water away from the cathode side of the fuel cell. Such differential degree of felting in a wicking material within a wicking structure adjacent to the anode will help to draw liquid fuel into the fuel cell.

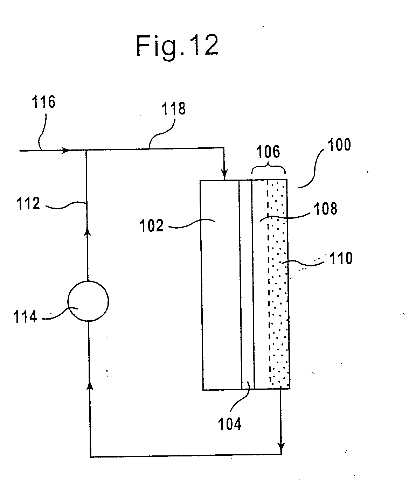

FIG. 12 schematically shows an embodiment of the liquid fuel cell **100** of the present invention containing a PEM **104** with the recirculation of the product water from the cathode **106** to the anode **102**. The cathode has a cathode wicking structure **110** incorporated therein and a layer **108** containing a catalyst. The product water at the cathode is wicked by the cathode wicking structure **110,** which water is carried away from the cathode wicking structure by water drawing means **114** and placed in water flow path **112** Water in the water flow path **112** is mixed with concentrated liquid fuel in concentrated liquid fuel line **116** to form an aqueous liquid fuel in the liquid fuel flow path **118** which delivers the aqueous liquid fuel to the anode.

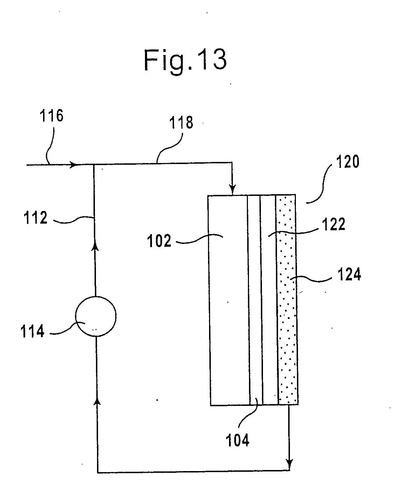

In FIG. 12 described above, as well as FIGs. 13-24, the electrical connection between the anode and cathode is not shown for the sake of brevity.

FIG. 13 schematically shows another embodiment of the liquid fuel cell **120** of the present invention containing a PEM **104** with the recirculation of the product water from the cathode **122** to the anode **102**. Adjacent to the cathode is a cathode wicking structure **124.**

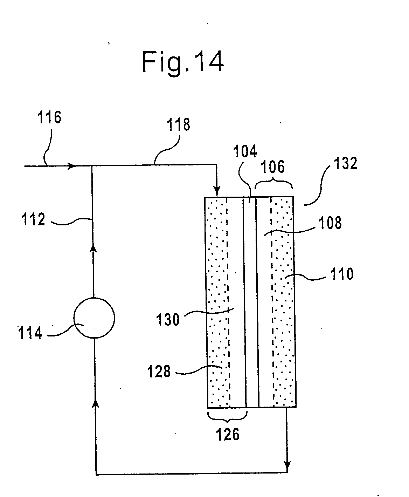

FIG. 14 schematically shows an embodiment of the liquid fuel cell **132** of the present invention containing a PEM **104** with the recirculation of the product water from the cathode **106** to the anode **126**, wherein the anode has anode wicking structure **128** incorporated therein. The cathode has a cathode wicking structure **110** incorporated therein and a layer **108** containing a catalyst. The product water at the cathode is wicked by the cathode wicking structure **110,** which water is carried away from the cathode wicking structure by water drawing means **114** and placed in water flow path **112.** Water in the water flow path **112** is mixed with concentrated liquid fuel in concentrated liquid fuel line **116** to form an aqueous liquid fuel in the liquid fuel flow path **118** which delivers the aqueous liquid fuel to an anode wicking structure **128** adjacent to a layer **130** containing a catalyst.

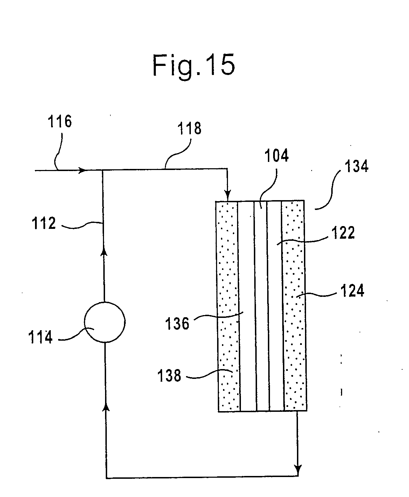

FIG. 15 schematically shows another embodiment of the liquid fuel cell **134** of the present invention containing a PEM **104** with the recirculation of the product water from the cathode **122** to the anode **136**. Adjacent to the cathode is a cathode wicking structure **124** and adjacent to the anode is an anode wicking structure **138**.

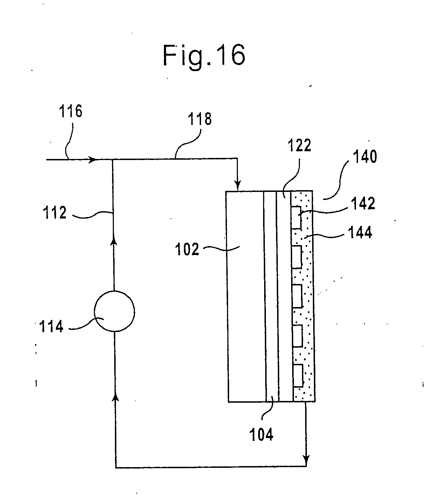

FIG. 16 schematically shows an embodiment of the liquid fuel cell **140** of the present invention containing a PEM **104** with the recirculation of the product water from the cathode **122** to the anode **102**. Adjacent to the cathode is a cathode wicking structure **144** having grooves **142** on the surface facing the cathode.

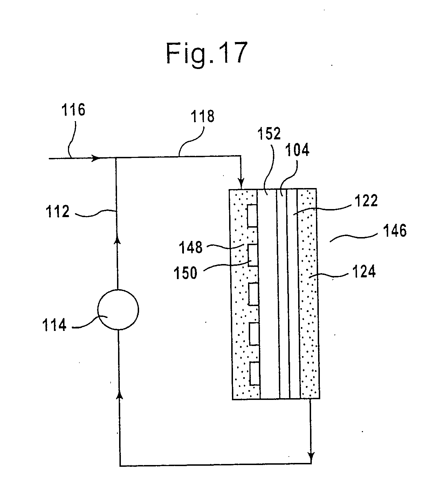

FIG. 17 schematically shows an embodiment of the liquid fuel cell **14**6 of the present invention with the recirculation of the product water from the cathode **122** to the anode **152**. Adjacent to the cathode is a cathode wicking structure **124**. Adjacent to the anode is an anode wicking structure **148** having grooves **150** on the surface facing the anode.

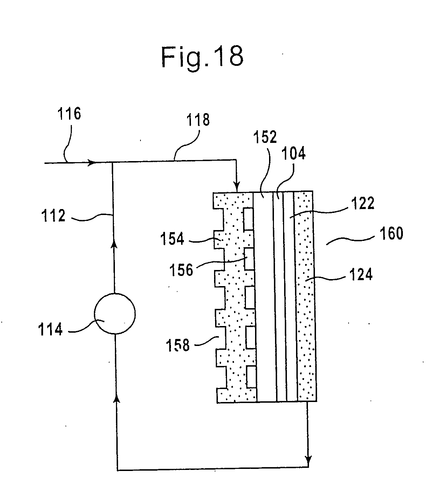

FIG. 18 schematically shows another embodiment of the liquid fuel cell **160** of the present invention with the recirculation of the product water from the cathode **122** to the anode **152**. Adjacent to the cathode is a cathode wicking structure **124**. Adjacent to the anode is an anode wicking structure **154** having grooves **156** on the surface facing the anode and grooves **158** on the surface facing away from the anode. The grooves on the surface of the anode wicking structure facing away from the anode aid in the delivery of the aqueous liquid fuel to the anode. The grooves on the surface of the anode wicking structure facing the anode aid in the removal of carbon dioxide from the anode.

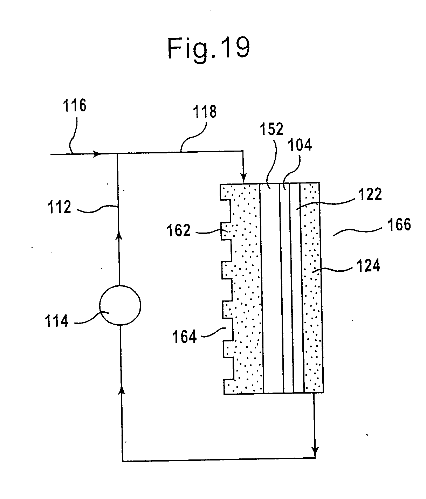

FIG. 19 schematically shows another embodiment of the liquid fuel cell **166** of the present invention with the recirculation of the product water from the cathode **122** to the anode **152**. Adjacent to the cathode is a cathode wicking structure **124**. Adjacent to the anode is an anode wicking structure **162** having grooves **164** on the surface facing away from the anode. The grooves on the surface of the anode wicking structure facing away from the anode aid in the delivery of the aqueous liquid fuel to the anode.

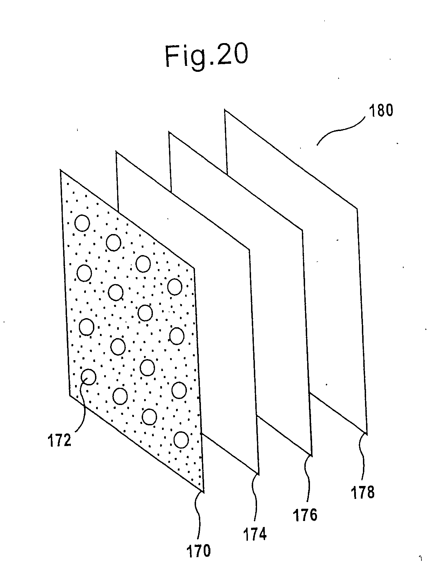

FIG. 20 is a schematic diagram showing an embodiment of the liquid fuel cell of the invention having perforation(s) in the wicking structure of at least one of the electrodes. The liquid fuel cell contains MEA **180**, comprising anode **174**, PEM **176**, cathode **178** and an anode wicking structure **170** having holes **172** adjacent to the anode.

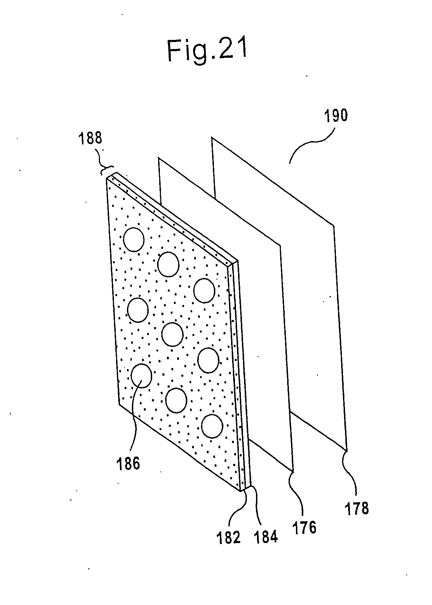

FIG. 21 is a schematic diagram showing an embodiment of the liquid fuel cell of the invention having perforation(s) in the wicking structure of at least one of the electrodes. The liquid fuel cell contains MEA **190**, comprising anode **188**, PEM **176** and cathode **178,** wherein the anode comprises a layer **184** having a catalyst and an anode wicking structure **182** having holes **186,** with the anode wicking structure incorporated in the anode.

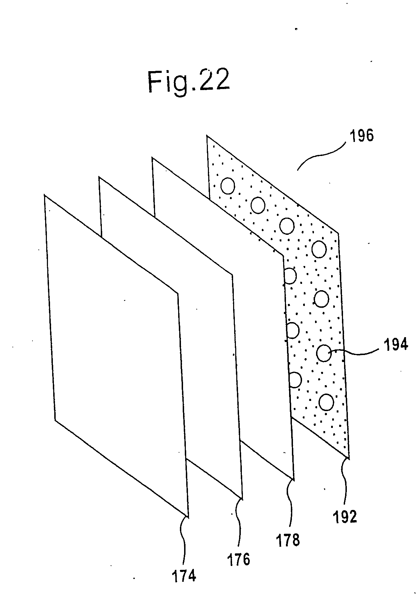

FIG. 22 is a schematic diagram showing an embodiment of the liquid fuel cell of the invention having perforation(s) in the wicking structure of at least one of the electrodes. The liquid fuel cell contains MEA **196**, comprising anode **174**, PEM **176**, cathode **178** and a cathode wicking structure **192** having holes **194** adjacent to the cathode.

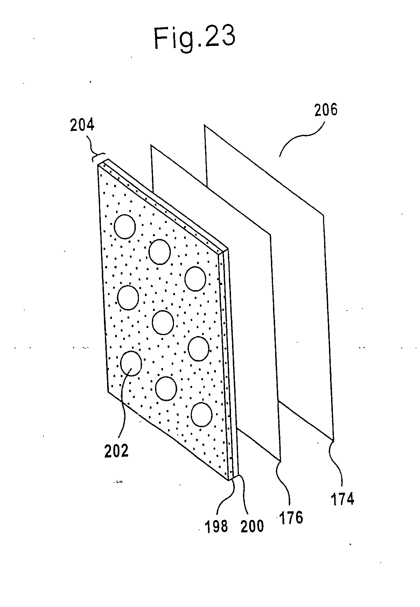

FIG. 23 is a schematic diagram showing an embodiment of the liquid fuel cell of the invention having perforation(s) in the wicking structure of at least one of the electrodes. The liquid fuel cell contains MEA **206**, comprising anode **174**, PEM **176** and cathode **204**, wherein the cathode comprises a layer **200** having a catalyst and a cathode wicking structure **198** having holes **202**, with the cathode wicking structure incorporated in the cathode.

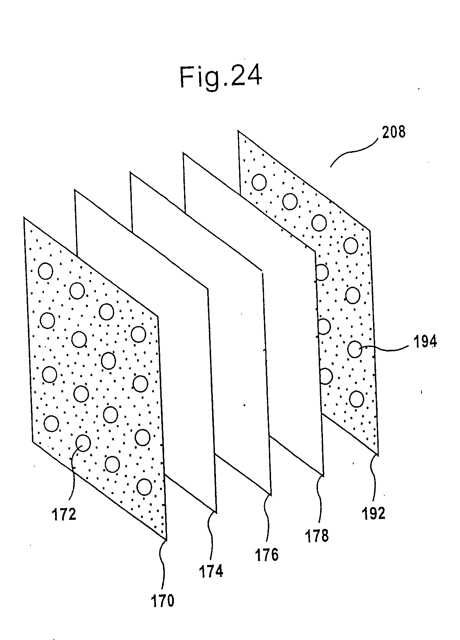

FIG. 24 is a schematic diagram showing an embodiment of the liquid fuel cell of the invention having perforation(s) in the wicking structure of at least one of the electrodes. The liquid fuel cell contains MEA **208,** comprising anode **174,** PEM **176,** cathode **178,** a cathode wicking structure **192** having holes **194** adjacent to the cathode and an anode wicking structure **170** having holes **172** adjacent to the anode.

Another aspect of the present invention is directed to liquid fuel cells with the recirculation of the product water from the cathode to the anode, wherein there is no external water added to the liquid fuel cell. In some of the embodiments of the liquid fuel cells of the present invention with the recirculation of the product water from the cathode to the anode, the water drawn from the cathode wicking structure is substantially the only water supplied to anode in the aqueous liquid fuel. In another embodiment of the liquid fuel cells of the present invention with the recirculation of the product water from the cathode to the anode, the water drawn from the cathode wicking structure and any water present in the concentrated liquid fuel is the only water supplied to anode.

In the liquid fuel cell of the present invention, the liquid fuel can be methanol, ethanol, ethylene glycol, trimethoxymethane, dimethoxymethane, formic acid and hydrazine, with methanol being preferred. The concentrated liquid fuel can be pure methanol or an aqueous mixture of methanol having a methanol concentration of at least about 25%, at least about 50%, at least about 65%, about 70% to about 99%, about 80% to about 98%, or about 85% to about 95%. The percentage of methanol in the aqueous methanol mixture is expressed in a weight-to-weight basis.

The invention has been illustrated by detailed description and examples of the preferred embodiments. Various changes in form and detail will be within the skill of persons skilled in the art. Therefore, the invention must be measured by the claims and not by the description of the examples or the preferred embodiments.

**Claims**

1. A liquid fuel cell, comprising
    an anode supplied with an aqueous liquid fuel which is oxidized at said anode;
    a cathode supplied with a gaseous oxidant;
    a solid polymer electrolyte membrane disposed between said anode and cathode;
    a liquid fuel flow path which delivers the liquid fuel to the anode;
    a water flow path which delivers water to the liquid fuel flow path;
    a concentrated liquid fuel line which delivers concentrated liquid fuel to the liquid fuel flow path to mix with water therein to form the aqueous liquid fuel;
    a cathode wicking structure incorporated in the cathode or in fluid communication therewith, wherein the cathode wicking structure comprises a cathode wicking material into which water can wick and from which the water can be released, said cathode wicking material having a cathode wicking material longest dimension and a free rise wick height greater than one half of the cathode wicking material longest dimension; and
    a water drawing means for drawing water from the cathode wicking structure to the water flow path.

2. The liquid fuel cell of claim 1, wherein the water drawing means is a pump or a wick having higher capillarity than the cathode wicking structure.

3. The liquid fuel cell of claim 2, wherein the water drawing means is the pump.

4. The liquid fuel cell of claim 2, wherein the water drawing means is the wick.

5. The liquid fuel cell of claim 1, wherein said cathode wicking material has a free rise wick height greater than the cathode wicking material longest dimension.

6. The liquid fuel cell of claim 1, wherein the cathode wicking material is selected from the group consisting of foams, bundled fibers, matted fibers, woven fibers, nonwoven fibers and inorganic porous materials.

7. The liquid fuel cell of claim 6, wherein the cathode wicking material is selected from the group consisting of foams, bundled fibers, matted fibers, woven fibers and nonwoven fibers.

8. The liquid fuel cell of claim 7, wherein the cathode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

9. The liquid fuel cell of claim 8, wherein the polyurethane foam is a felted polyurethane foam, reticulated polyurethane foam or felted reticulated polyurethane foam, the polyamide is nylon and the polyester is polyethylene terephthalate.

10. The liquid fuel cell of claim 9, wherein the cathode wicking material is a felted polyurethane foam, reticulated polyurethane foam or felted reticulated polyurethane foam.

11. The liquid fuel cell of claim 1, wherein the cathode wicking structure has a thickness and defines at least one hole through said thickness having a size such as to deliver an effective amount of the gaseous oxidant to the cathode to conduct an oxidizing reaction thereon.

12. The liquid fuel cell of claim 11, wherein the cathode wicking structure has a plurality of holes through said thickness, and wherein the number and size of the holes deliver therethrough an effective amount of the gaseous oxidant to the cathode to conduct an oxidizing reaction thereon.

13. The liquid fuel cell of claim 1, wherein
    the cathode wicking structure is incorporated in the cathode;
    the cathode further comprises a first cathode surface, second cathode surface and catalyst on the second cathode surface, said second cathode surface being adjacent to the solid polymer electrolyte membrane and said first cathode surface facing away from the solid polymer electrolyte membrane; and
    the cathode wicking structure is planar and has first and second cathode wicking structure surfaces, said second cathode wicking structure surface being adjacent to the catalyst, the first cathode wicking structure surface forming the first cathode surface, and said first cathode wicking structure surface having at least one groove thereon with a size such as to deliver an amount of the gaseous oxidant to the cathode to conduct an oxidizing reaction thereon.

14. The liquid fuel cell of claim 13, wherein said first cathode wicking structure surface has a plurality of grooves thereon, and wherein the number and size of the grooves are such as to deliver an effective amount of the gaseous oxidant to the cathode to conduct an oxidizing reaction thereon.

15. The liquid fuel cell of claim 1, wherein
    the cathode wicking structure is external to but in fluid communication with the cathode;
    the cathode further comprises a first cathode surface and second cathode surface, said second cathode surface being adjacent to the solid polymer electrolyte membrane and said first cathode surface facing away from the solid polymer electrolyte membrane; and
    the cathode wicking structure is planar and has a first and second cathode wicking structure surfaces, said second cathode wicking structure surface being adjacent to the first cathode surface and said first cathode wicking structure surface facing away from the cathode, and said second cathode wicking structure surface having at least one groove thereon with a size such as to deliver an amount of the gaseous oxidant to the cathode to conduct an oxidizing reaction thereon.

16. The liquid fuel cell of claim 15, wherein said second cathode wicking structure surface has a plurality of grooves thereon, and wherein the number and size of the grooves are such as to deliver an effective amount of the gaseous oxidant to the cathode to conduct an oxidizing reaction thereon.

17. The liquid fuel cell of claim 1, further comprising an electrically conductive layer adjacent to the cathode wicking structure.

18. The liquid fuel cell of claim 17, wherein the electrically conductive layer is attached to a surface of the cathode wicking structure.

19. The liquid fuel cell of claim 18, wherein the electrically conductive layer is crimped to the surface of the cathode wicking structure.

20. The liquid fuel cell of claim 17, wherein the electrically conductive layer comprises a metal screen, metal wool or expanded metal foil.

21. The liquid fuel cell of claim 17, wherein the electrically conductive layer comprises an electrically conductive coating on a surface of the cathode wicking structure, said conductive coating comprising a substance selected from the group consisting of metals and carbon, or mixtures thereof.

22. The liquid fuel cell of claim 17, wherein the electrically conductive layer is in electrical communication with a current circuit.

23. The liquid fuel cell of claim 1, wherein the cathode wicking structure has a capillarity gradient that pulls water away from the cathode.

24. The fuel cell of claim 23, wherein the cathode wicking structure comprises at least first and second wicking material, wherein said first wicking material has higher capillarity than the second wicking material, and wherein said first wicking material has a longest dimension, and the free rise wick height of the first wicking material is greater than one half of the longest dimension.

25. The fuel cell of claim 24, wherein the free rise wick height of the first wicking material is greater than the longest dimension thereof.

26. The liquid fuel cell of claim 1, further comprising an anode wicking structure incorporated in the anode or in fluid communication therewith, wherein the anode wicking structure comprises an anode wicking material into which the liquid fuel can wick and from which the liquid fuel can be released, said anode wicking material having an anode wicking material longest dimension and a free rise wick height greater than one half of the anode wicking material longest dimension, and said anode wicking structure being in fluid communication with the liquid fuel flow path.

**27.** The liquid fuel cell of claim 26, wherein said anode wicking material has a free rise wick height greater than the anode wicking material longest dimension.

**28.** The liquid fuel cell of claim 26, wherein the anode wicking material is selected from the group consisting of foams, bundled fibers, matted fibers, woven fibers, nonwoven fibers and inorganic porous materials.

**29.** The liquid fuel cell of claim 28, wherein the anode wicking material is selected from the group consisting of foams, bundled fibers, matted fibers, woven fibers and nonwoven fibers.

**30.** The liquid fuel cell of claim 29, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**31.** The liquid fuel cell of claim 30, wherein the polyurethane foam is a felted polyurethane foam, reticulated polyurethane foam or felted reticulated polyurethane foam, the polyamide is nylon and the polyester is polyethylene terephthalate.

**32.** The liquid fuel cell of claim 31, wherein the anode wicking material is a felted polyurethane foam, reticulated polyurethane foam or felted reticulated polyurethane foam.

**33.** The liquid fuel cell of claim 26, wherein the anode wicking structure has a thickness and defines at least one hole through said thickness having an opening area sized to permit the removal of carbon dioxide from the anode.

**34.** The liquid fuel cell of claim 33, wherein the anode wicking structure has a plurality of holes through said thickness having a total opening area sized to permit the removal of carbon dioxide from the anode.

**35.** The liquid fuel cell of claim 26, wherein
the anode wicking structure is incorporated in the anode;
the anode further comprises a first anode surface, a second anode surface and catalyst on the second anode surface, said second anode surface being adjacent to the solid polymer electrolyte membrane and said first anode surface facing away from the solid polymer electrolyte membrane; and
the anode wicking structure is planar and has a first and second anode wicking structure surfaces, said second anode wicking structure surface being adjacent to the catalyst, said first anode wicking structure surface forming the first anode surface and having at least one groove thereon with a size such as to allow carbon dioxide to escape from the anode.

**36.** The liquid fuel cell of claim 35, wherein said first anode wicking structure surface has a plurality of grooves thereon, and wherein the number and size of the grooves are such as to allow carbon dioxide to escape from the anode.

**37.** The liquid fuel cell of claim 26, wherein
the anode wicking structure is external to but in fluid communication with the anode;
the anode further comprises a first anode surface and a second anode surface, said second anode surface being adjacent to the solid polymer electrolyte membrane and said first anode surface facing away from the solid polymer electrolyte membrane; and
the anode wicking structure is planar and has a first and second anode wicking structure surfaces, said second anode wicking structure surface being adjacent to the first anode surface and having at least one groove thereon with a size such as to allow carbon dioxide to escape from the anode, and said first anode wicking structure surface facing away from the anode.

**38.** The liquid fuel cell of claim 37, wherein said second anode wicking structure surface has a plurality of grooves thereon, and wherein the number and size of the grooves are such as to allow carbon dioxide to escape from the anode.

**39.** The liquid fuel cell of claim 26, further comprising an electrically conductive layer adjacent to the anode wicking structure.

**40.** The liquid fuel cell of claim 39, wherein the electrically conductive layer is attached to a surface of the anode wicking structure.

**41.** The liquid fuel cell of claim 39, wherein the electrically conductive layer is crimped to the surface of the anode wicking structure.

**42.** The liquid fuel cell of claim 39, wherein the electrically conductive layer comprises a metal screen, metal wool or expanded metal foil.

**43.** The liquid fuel cell of claim 39, wherein the electrically conductive layer comprises an electrically conductive coating on a surface of the cathode wicking structure, said conductive coating comprising a substance selected from the group consisting of metals and carbon, or mixtures thereof.

**44.** The liquid fuel cell of claim 39, wherein the electrically conductive layer is in electrical communication with a current circuit.

**45.** The liquid fuel cell of claim 26, wherein the anode wicking structure has a capillarity gradient that drives the liquid fuel from the liquid fuel flow path to the anode.

**46.** The fuel cell of claim 45, wherein the anode wicking structure comprises at least a first and second wicking materials, wherein said first wicking material, has higher capillarity than the second wicking material, and wherein said first wicking material has a longest dimension, and the free rise wick height of the first wicking material is greater than one half of the longest dimension.

**47.** The fuel cell of claim 46, wherein the free rise wick height of the first wicking material is greater than the longest dimension.

**48.** The liquid fuel cell of claim 12, further comprising an anode wicking structure incorporated in the anode or in fluid communication therewith, wherein the anode wicking structure comprises an anode wicking material into which the liquid fuel can wick and from which the liquid fuel can be released, said anode wicking material having an anode wicking material longest dimension and a free rise wick height greater than one half of the anode wicking material longest dimension, and said anode wicking structure being in fluid communication with the liquid fuel flow path.

**49.** The liquid fuel cell of claim 48, wherein said anode wicking material has a free rise wick height greater than the anode wicking material longest dimension.

**50.** The liquid fuel cell of claim 48, wherein said anode wicking structure has a thickness and defines at least one hole through said thickness having an opening area sized to permit the removal of carbon dioxide from the anode.

**51.** The liquid fuel cell of claim 50, wherein said anode wicking structure has a plurality of holes through said thickness having a total opening area sized to permit the removal of carbon dioxide from the anode.

**52.** The liquid fuel cell of claim 48, wherein the anode wicking material is selected from the group consisting of foams, bundled fibers, matted fibers, woven fibers, nonwoven fibers and inorganic porous materials.

**53.** The liquid fuel cell of claim 52, wherein the anode wicking material is selected from the group consisting of foams, bundled fibers, matted fibers, woven fibers and nonwoven fibers.

**54.** The liquid fuel cell of claim 53, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**55.** The liquid fuel cell of claim 54, wherein the polyurethane foam is a felted polyurethane foam, reticulated polyurethane foam or felted reticulated polyurethane foam, the polyamide is nylon and the polyester is polyethylene terephthalate.

**56.** The liquid fuel cell of claim 53, wherein the anode wicking material is a felted polyurethane foam, reticulated polyurethane foam or felted reticulated polyurethane foam.

**57.** The liquid fuel cell of claim 48, wherein
the anode wicking structure is incorporated in the cathode;
the anode further comprises a first anode surface, second anode surface and catalyst on the second anode surface, said second anode surface being adjacent to the solid polymer electrolyte membrane and said first anode surface facing away from the solid polymer electrolyte membrane; and
the anode wicking structure is planar and has a first and second anode wicking structure surfaces, said second anode wicking structure surface being adjacent to the catalyst, the first anode wicking structure surface forming the first anode surface, and said first anode wicking structure surface having at least one groove with a size such as to allow carbon dioxide to escape from the anode.

**58.** The liquid fuel cell of claim 57, wherein said first anode wicking structure surface has a plurality of grooves, and wherein the number and size of the grooves are such as to allow carbon dioxide to escape from the anode.

**59.** The liquid fuel cell of claim 58, wherein the anode wicking material is selected from the group consisting of foams, bundled fibers, matted fibers, woven fibers, nonwoven fibers and inorganic porous materials.

**60.** The liquid fuel cell of claim 59, wherein the anode wicking material is selected from the group consisting of foams, bundled fibers, matted fibers, woven fibers and nonwoven fibers.

**61.** The liquid fuel cell of claim 60, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**62.** The liquid fuel cell of claim 61, wherein the polyurethane foam is a felted polyurethane foam, reticulated polyurethane foam or felted reticulated polyurethane foam, the polyamide is nylon and the polyester is polyethylene terephthalate.

**63.** The liquid fuel cell of claim 61, wherein the anode wicking material is a felted polyurethane foam, reticulated polyurethane foam or felted reticulated polyurethane foam.

**64.** The liquid fuel cell of claim 48, wherein
the anode wicking structure is external to but in fluid communication with the cathode;
the anode further comprises a first anode surface and second anode surface, said second anode surface being adjacent to the solid polymer electrolyte membrane and said first anode surface facing away from the solid polymer electrolyte membrane; and
the anode wicking structure is planar and has a first and second anode wicking structure surfaces, said second anode wicking structure surface being adjacent to the first anode surface and said first anode wicking structure surface facing away from the anode , and said second anode wicking structure surface having at least one groove with a size such as to allow carbon dioxide to escape from the anode.

**65.** The liquid fuel cell of claim 64, wherein said second anode wicking structure surface has a plurality of grooves, and wherein the number and size of the grooves are such as to allow carbon dioxide to escape from the anode.

**66.** The liquid fuel cell of claim 65, wherein the anode wicking material is selected from the group consisting of foams, bundled fibers, matted fibers, woven fibers, nonwoven fibers and inorganic porous materials.

**67.** The liquid fuel cell of claim 66, wherein the anode wicking material is selected from the group consisting of foams, bundled fibers, matted fibers, woven fibers and nonwoven fibers.

**68.** The liquid fuel cell of claim 67, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**69.** The liquid fuel cell of claim 68, wherein the polyurethane foam is a felted polyurethane foam, reticulated polyurethane foam or felted reticulated polyurethane foam, the polyamide is nylon and the polyester is polyethylene terephthalate.

**70.** The liquid fuel cell of claim 68, wherein the anode wicking material is a felted polyurethane foam, reticulated polyurethane foam or felted reticulated polyurethane foam.

**71.** The liquid fuel cell of claim 14, further comprising an anode wicking structure incorporated in the anode or in fluid communication therewith, wherein the anode wicking structure comprises an anode wicking material into which the liquid fuel can wick and from which the liquid fuel can be released, said anode wicking material having an anode wicking material longest dimension and a free rise wick height greater than one half of the anode wicking material longest dimension, and said anode wicking structure being in fluid communication with the liquid fuel flow path.

**72.** The liquid fuel cell of claim 71, wherein said anode wicking material having a free rise wick height greater than the anode wicking material longest dimension.

**73.** The liquid fuel cell of claim 71, wherein said anode wicking structure has a thickness and defines at least one hole through said thickness with a size such as to permit the removal of carbon dioxide from the anode.

**74.** The liquid fuel cell of claim 73, wherein said anode wicking structure has a plurality of holes through said thickness having a total opening area sized to permit the removal of carbon dioxide from the anode.

**75.** The liquid fuel cell of claim 74, wherein the anode wicking material is selected from the group consisting of foams, bundled fibers, matted fibers, woven fibers, nonwoven fibers and inorganic porous materials.

**76.** The liquid fuel cell of claim 75, wherein the anode wicking material is selected from the group consisting of foams, bundled fibers, matted fibers, woven fibers and nonwoven fibers.

**77.** The liquid fuel cell of claim 75, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**78.** The liquid fuel cell of claim 77, wherein the polyurethane foam is a felted polyurethane foam, reticulated polyurethane foam or felted reticulated polyurethane foam, the polyamide is nylon and the polyester is polyethylene terephthalate.

**79.** The liquid fuel cell of claim 77, wherein the anode wicking material is a felted polyurethane foam, reticulated polyurethane foam or felted reticulated polyurethane foam.

**80.** The liquid fuel cell of claim 71, wherein
the anode wicking structure is incorporated in the anode ;
the anode further comprises a first anode surface, second anode surface and catalyst on the second anode surface, said second anode surface being adjacent to the solid polymer electrolyte membrane and said first anode surface facing away from the solid polymer electrolyte membrane; and
the anode wicking structure is planar and has a first and second anode wicking structure surfaces, said second anode wicking structure surface being adjacent to the catalyst, the first anode wicking structure surface forming the first anode surface, and said first anode wicking structure surface having at least one groove with a size such as to allow carbon dioxide to escape from the anode.

**81.** The liquid fuel cell of claim 80, wherein said first anode wicking structure surface has a plurality of grooves, and wherein the number and size of the grooves are such as to allow carbon dioxide to escape from the anode.

**82.** The liquid fuel cell of claim 81, wherein the anode wicking material is selected from the group consisting of foams, bundled fibers, matted fibers, woven fibers, nonwoven fibers and inorganic porous materials.

**83.** The liquid fuel cell of claim 82, wherein the anode wicking material is selected from the group consisting of foams, bundled fibers, matted fibers, woven fibers and nonwoven fibers.

**84.** The liquid fuel cell of claim 83, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**85.** The liquid fuel cell of claim 84, wherein the polyurethane foam is a felted polyurethane foam, reticulated polyurethane foam or felted reticulated polyurethane foam, the polyamide is nylon and the polyester is polyethylene terephthalate.

**86.** The liquid fuel cell of claim 84, wherein the anode wicking material is a felted polyurethane foam, reticulated polyurethane foam or felted reticulated polyurethane foam.

**87.** The liquid fuel cell of claim 71, wherein
the anode wicking structure is external to but in fluid communication with the anode ;
the anode further comprises a first anode surface and second anode surface, said second anode surface being adjacent to the solid polymer electrolyte membrane and said first anode surface facing away from the solid polymer electrolyte membrane; and
the anode wicking structure is planar and has a first and second anode wicking structure surfaces, said second anode wicking structure surface being adjacent to the first anode surface and said first anode wicking structure surface facing away from the anode , and said second anode wicking structure surface having at least one groove with a size such as to allow carbon dioxide to escape from the anode.

**88.** The liquid fuel cell of claim 87, wherein said second anode wicking structure surface has a plurality of grooves, and wherein the number and size of the grooves are such as to allow carbon dioxide to escape from the anode.

**89.** The liquid fuel cell of claim 88, wherein the anode wicking material is selected from the group consisting of foams, bundled fibers, matted fibers, woven fibers, nonwoven fibers and inorganic porous materials.

**90.** The liquid fuel cell of claim 89, wherein the anode wicking material is selected from the group consisting of foams, bundled fibers, matted fibers, woven fibers and nonwoven fibers.

**91.** The liquid fuel cell of claim 90, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**92.** The liquid fuel cell of claim 91, wherein the polyurethane foam is a felted polyurethane foam, reticulated polyurethane foam or felted reticulated polyurethane foam, the polyamide is nylon and the polyester is polyethylene terephthalate.

**93.** The liquid fuel cell of claim 90, wherein the anode wicking material is a felted polyurethane foam, reticulated polyurethane foam or felted reticulated polyurethane foam.

**94.** The liquid fuel cell of claim 16, further comprising an anode wicking structure incorporated in the anode or in fluid communication therewith, wherein the anode wicking structure comprises an anode wicking material into which the liquid fuel can wick and from which the liquid fuel can be released, said anode wicking material having an anode wicking material longest dimension and a free rise wick height greater than one half of the anode wicking material longest dimension, and said anode wicking structure being in fluid communication with the liquid fuel flow path.

**95.** The liquid fuel cell of claim 94, wherein said anode wicking material having a free rise wick height greater than the anode wicking material longest dimension.

**96.** The liquid fuel cell of claim 94, wherein said anode wicking structure has a thickness and defines at least one hole through said thickness with a size such as to permit the removal of carbon dioxide from the anode.

**97.** The liquid fuel cell of claim 96, wherein said anode wicking structure has a plurality of holes through said thickness having a total opening area sized to permit the removal of carbon dioxide from the anode.

**98.** The liquid fuel cell of claim 97, wherein the anode wicking material is selected from the group consisting of foams, bundled fibers, matted fibers, woven fibers, nonwoven fibers and inorganic porous materials.

**99.** The liquid fuel cell of claim 98, wherein the anode wicking material is selected from the group consisting of foams, bundled fibers, matted fibers, woven fibers and nonwoven fibers.

**100.** The liquid fuel cell of claim 98, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**101.** The liquid fuel cell of claim 100, wherein the polyurethane foam is a felted polyurethane foam, reticulated polyurethane foam or felted reticulated polyurethane foam, the polyamide is nylon and the polyester is polyethylene terephthalate.

**102.** The liquid fuel cell of claim 100, wherein the anode wicking material is a felted polyurethane foam, reticulated polyurethane foam or felted reticulated polyurethane foam.

**103.** The liquid fuel cell of claim 94, wherein
the anode wicking structure is incorporated in the anode ;
the anode further comprises a first anode surface, second anode surface and catalyst on the second anode surface, said second anode surface being adjacent to the solid polymer electrolyte membrane and said first anode surface facing away from the solid polymer electrolyte membrane; and
the anode wicking structure is planar and has a first and second anode wicking structure surfaces, said second anode wicking structure surface being adjacent to the catalyst, the first anode wicking structure surface forming the first anode surface, and said first anode wicking structure surface having at least one groove with a size such as to allow carbon dioxide to escape from the anode.

**104.** The liquid fuel cell of claim 103, wherein said first anode wicking structure surface has a plurality of grooves, and wherein the number and size of the grooves are such as to allow carbon dioxide to escape from the anode.

**105.** The liquid fuel cell of claim 104, wherein the anode wicking material is selected from the group consisting of foams, bundled fibers, matted fibers, woven fibers, nonwoven fibers and inorganic porous materials.

**106.** The liquid fuel cell of claim 104, wherein the anode wicking material is selected from the group consisting of foams, bundled fibers, matted fibers, woven fibers and nonwoven fibers.

**107.** The liquid fuel cell of claim 106, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**108.** The liquid fuel cell of claim 107, wherein the polyurethane foam is a felted polyurethane foam, reticulated polyurethane foam or felted reticulated polyurethane foam, the polyamide is nylon and the polyester is polyethylene terephthalate.

**109.** The liquid fuel cell of claim 107, wherein the anode wicking material is a felted polyurethane foam, reticulated polyurethane foam or felted reticulated polyurethane foam.

**110.** The liquid fuel cell of claim 94, wherein
the anode wicking structure is external to but in fluid communication with the anode ;
the anode further comprises a first anode surface and second anode surface, said second anode surface being adjacent to the solid polymer electrolyte membrane and said first anode surface facing away from the solid polymer electrolyte membrane; and
the anode wicking structure is planar and has a first and second anode wicking structure surfaces, said second anode wicking structure surface being adjacent to the first anode surface and said first anode wicking structure surface facing away from the anode , and said second anode wicking structure surface having at least one groove with a size such as to allow carbon dioxide to escape from the anode.

**111.** The liquid fuel cell of claim 110, wherein said second anode wicking structure surface has a plurality of grooves, and wherein the number and size of the grooves are such as to allow carbon dioxide to escape from the anode.

**112.** The liquid fuel cell of claim 111, wherein the anode wicking material is selected from the group consisting of foams, bundled fibers, matted fibers, woven fibers, nonwoven fibers and inorganic porous materials.

**113.** The liquid fuel cell of claim 112, wherein the anode wicking material is selected from the group consisting of foams, bundled fibers, matted fibers, woven fibers and nonwoven fibers.

**114.** The liquid fuel cell of claim 113, wherein the anode wicking material is selected from the group consisting of polyurethane foam, melamine foam, cellulose foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**115.** The liquid fuel cell of claim 114, wherein the polyurethane foam is a felted polyurethane foam, reticulated polyurethane foam or felted reticulated polyurethane foam, the polyamide is nylon and the polyester is polyethylene terephthalate.

**116.** The liquid fuel cell of claim 114, wherein the anode wicking material is a felted polyurethane foam, reticulated polyurethane foam or felted reticulated polyurethane foam.

**117.** The liquid fuel cell of claim 1, wherein
the cathode wicking structure is incorporated in the cathode;
the cathode further comprises a first cathode surface, second cathode surface and catalyst on the second cathode surface, said second cathode surface being adjacent to the solid polymer electrolyte membrane and said first cathode surface facing away from the solid polymer electrolyte membrane; and
the cathode wicking structure is planar and has first and second cathode wicking structure surfaces, said second cathode wicking structure surface being adjacent to the catalyst, the first cathode wicking structure surface forming the first cathode surface.

**118.** The liquid fuel cell of claim 1, wherein
the cathode wicking structure is external to but in fluid communication with the cathode;
the cathode further comprises a first cathode surface and second cathode , surface, said second cathode surface being adjacent to the solid polymer electrolyte membrane and said first cathode surface facing away from the solid polymer electrolyte membrane; and
the cathode wicking structure is planar and has a first and second cathode wicking structure surfaces, said second cathode wicking structure surface being adjacent to the first cathode surface and said first cathode wicking structure surface facing away from the cathode.

**119.** The liquid fuel cell of claim 26, wherein
the anode wicking structure is incorporated in the anode;

the anode further comprises a first anode surface, a second anode surface and catalyst on the second anode surface, said second anode surface being adjacent to the solid polymer electrolyte membrane and said first anode surface facing away from the solid polymer electrolyte membrane; and

the anode wicking structure is planar and has a first and second anode wicking structure surfaces, said second anode wicking structure surface being adjacent to the catalyst, said first anode wicking structure surface forming the first anode surface.

120. The liquid fuel cell of claim 26, wherein

the anode wicking structure is external to but in fluid communication with the anode;

the anode further comprises a first anode surface and a second anode surface, said second anode surface being adjacent to the solid polymer electrolyte membrane and said first anode surface facing away from the solid polymer electrolyte membrane; and

the anode wicking structure is planar and has a first and second anode wicking structure surfaces, said second anode wicking structure surface being adjacent to the first anode surface, and said first anode wicking structure surface facing away from the anode.

121. A liquid fuel cell, comprising

an anode supplied with a liquid fuel which is oxidized at said anode;

a cathode supplied with a gaseous oxidant;

a solid polymer electrolyte membrane disposed between said anode and cathode;

a cathode wicking structure incorporated in the cathode or in fluid communication therewith, wherein the cathode wicking structure comprises a cathode wicking material into which water can wick and from which the water can be released, said cathode wicking material having a cathode wicking material longest dimension and a free rise wick height greater than one half of the cathode wicking material longest dimension,

wherein said cathode wicking material has a thickness and defines a plurality of holes through said thickness, said holes having substantially no capillarity; and

wherein the number and size of the holes are such as to deliver therethrough an effective amount of the gaseous oxidant to the cathode to conduct an oxidizing reaction thereon.

122. The liquid fuel cell of claim 121, wherein the free rise wick height is greater than the cathode wicking material longest dimension.

123. The liquid fuel cell of claim 121, further comprising an anode wicking structure incorporated in the anode or in fluid communication therewith, wherein the anode wicking structure comprises an anode wicking material into which the liquid fuel can wick.

124. The liquid fuel cell of claim 1, wherein

the cathode wicking structure is external to but in fluid communication with the cathode;

the cathode further comprises a first cathode surface and second cathode surface, said second cathode surface being adjacent to the solid polymer electrolyte membrane and said first cathode surface facing away from the solid polymer electrolyte membrane; and

the cathode wicking structure is planar and has a first and second cathode wicking structure surfaces, said second cathode wicking structure surface facing toward the cathode and said first cathode wicking structure surface facing away from the cathode.

125. The liquid fuel cell of claim 26, wherein

the cathode wicking structure is external to but in fluid communication with the cathode;

the cathode further comprises a first cathode surface and second cathode surface, said second cathode surface being adjacent to the solid polymer electrolyte membrane and said first cathode surface facing away from the solid polymer electrolyte membrane; and

the cathode wicking structure is planar and has a first and second cathode wicking structure surfaces, said second cathode wicking structure surface facing toward the cathode and said first cathode wicking structure surface facing away from the cathode.

126. The liquid fuel cell of claim 26, wherein

the anode wicking structure is external to but in fluid communication with the anode;

the anode further comprises a first anode surface and a second anode surface, said second anode surface being adjacent to the solid polymer electrolyte membrane and said first anode surface facing away from the solid polymer electrolyte membrane; and

the anode wicking structure is planar and has a first and second anode wicking structure surfaces, said second anode wicking structure surface facing toward the anode, and said first anode wicking structure surface facing away from the anode.

127. The liquid fuel cell of claim 125, wherein

the anode wicking structure is external to but in fluid communication with the anode;

the anode further comprises a first anode surface and a second anode surface, said second anode surface being adjacent to the solid polymer electrolyte membrane and said first anode surface facing away from the solid polymer electrolyte membrane; and

the anode wicking structure is planar and has a first and second anode wicking structure surfaces, said second anode wicking structure surface facing toward the anode, and said first anode wicking structure surface facing away from the anode.

**128.** The liquid fuel cell of claim 124, wherein said second cathode wicking structure surface has at least one groove thereon with a size such as to deliver an amount of the gaseous oxidant to the cathode to conduct an oxidizing reaction at the cathode.

**129.** The liquid fuel cell of claim 128, wherein said second cathode wicking structure surface has a plurality of grooves thereon and wherein the size and number of the grooves are such as to deliver an effective amount of the gaseous oxidant to the cathode to conduct an oxidizing reaction at the cathode.

**130.** The liquid fuel cell of claim 124, wherein said cathode wicking structure has a thickness and defines at least one hole through the thickness with a size such as to deliver an amount of the gaseous oxidant to the cathode to conduct an oxidizing reaction at the cathode.

**131.** The liquid fuel cell of claim 130, wherein said cathode wicking structure has a plurality of holes through the thickness and wherein the size and number of the holes are such as to deliver an effective amount of the gaseous oxidant to the cathode to conduct an oxidizing reaction at the cathode.

**132.** The liquid fuel cell of claim 125, wherein said second cathode wicking structure surface has at least one groove thereon with a size such as to deliver an amount of the gaseous oxidant to the cathode to conduct an oxidizing reaction at the cathode.

**133.** The liquid fuel cell of claim 132, wherein said second cathode wicking structure surface has a plurality of grooves thereon and wherein the size and number of the grooves are such as to deliver an effective amount of the gaseous oxidant to the cathode to conduct an oxidizing reaction at the cathode.

**134.** The liquid fuel cell of claim 125, wherein said cathode wicking structure has a thickness and defines at least one hole through the thickness with a size such as to deliver an amount of the gaseous oxidant to the cathode to conduct an oxidizing reaction at the cathode.

**135.** The liquid fuel cell of claim 134, wherein said cathode wicking structure has a plurality of holes through the thickness and wherein the size and number of the holes are such as to deliver an effective amount of the gaseous oxidant to the cathode to conduct an oxidizing reaction at the cathode.

**136.** The liquid fuel cell of claim 126, wherein said anode wicking structure has a thickness and defines at least one hole through the thickness with a size such as to allow the removal of carbon dioxide from the anode.

**137.** The liquid fuel cell of claim 136, wherein said anode wicking structure has a plurality of holes through the thickness and wherein the size and number of the holes are such as to allow the removal of carbon dioxide from the anode.

**138.** The liquid fuel cell of claim 127, wherein said anode wicking structure has a thickness and defines at least one hole through the thickness with a size such as to allow the removal of carbon dioxide from the anode.

**139.** The liquid fuel cell of claim 138, wherein said anode wicking structure has a plurality of holes through the thickness and wherein the size and number of the holes are such as to allow the removal of carbon dioxide from the anode.

Fig.1.

Fig.7.

Fig.2.

Fig.4.

Fig.3.

Fig.5.

Fig.6.

*Fig.8.*

*Fig.9.*

*Fig.10.*

*Fig.11.*

# Fig.12

# Fig.13

# Fig.14

# Fig.15

# Fig.16

Fig.17

# Fig.18

Fig.19

Fig.20

180

172

170

174

176

178

Fig.21

Fig.22

196

194

192

178

176

174

## Fig.23

Fig.24